# FASCICULE DE BREVET EUROPEEN

(11) **EP 2 357 113 B1**
(45) Date de publication et mention de la délivrance du brevet: **03.12.2014**
(21) Numéro de dépôt: 11152173.8
(22) Date de dépôt: 26.01.2011
(51) Int. Cl.: B60T 8/00, B60T 13/68, B64C 25/42, B60T 17/18

(54) **Architecture de freinage hydraulique pour aéronef avec freins à demi-cavités.**
Hydraulisches Bremssystem für Flugzeuge mit gleichzeitig angesteuerten Doppelkammerbremsen.
Hydraulic braking system for aircraft with simultaneously actuated dual working chamber brakes.

(30) Priorité: 03.02.2010 FR 1000447
(43) Date de publication de la demande: 17.08.2011
(73) Titulaire: Messier-Bugatti-Dowty, 78140 Vélizy-Villacoublay (FR)
(72) Inventeur: Frank, David, 75013, PARIS (FR)
(74) Mandataire: Parzy, Benjamin Alain

(56) Documents cités:
- EP-A1- 0 928 740
- WO-A2-03/008811
- US-A- 5 456 523

## Description

L'invention concerne une architecture de freinage hydraulique pour aéronef avec freins à demi-cavités.

### ARRIERE-PLAN TECHNOLOGIQUE DE L'INVENTION

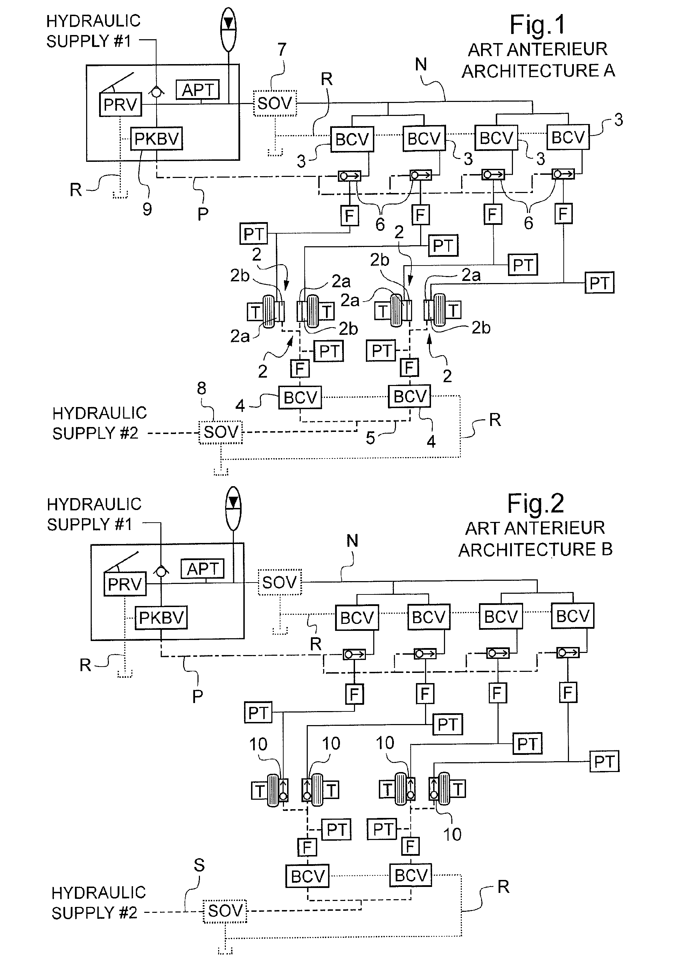

On connaît différents types d'architecture de freinage hydraulique, selon que l'avionneur veut privilégier la masse, la performance ou la maintenabilité ou la disponibilité de celle-ci. Ces différents types d'architecture sont illustrés de façon schématique aux figures 1 à 4 en application à un aéronef à quatre roues freinées.

Un premier type d'architecture A illustré à la figure 1 comporte deux circuits de freinage dont un circuit normal N (en traits continus épais) et un circuit secours S (en traits interrompus épais). Les quatre freins 2 comportent chacun deux cavités 2a et 2b, chaque cavité étant alimentée par l'un seul des circuits de freinage. Le circuit normal N comporte quatre distributeurs 3, en l'occurrence ici des servovalves ou BCV (pour brake control valve) alimentant chacune l'une des cavités de chaque frein, en l'occurrence la cavité 2a. Cette disposition permet de contrôler de façon indépendante chacun des freins, ce qui contribue à minimiser la distance de freinage. Le circuit Secours ne comporte quant à lui que deux servovalves ou BCV 4, alimentant chacune deux cavités 2b sur deux freins différents, ce qui a pour effet de minimiser le coût et la masse du circuit secours, au détriment cependant de la distance d'arrêt sur circuit Secours. En effet, le contrôle appairé des freins ne permet pas d'optimiser l'effort de freinage sur chacune des deux roues concernées, mais uniquement sur la plus « faible » des deux. En effet, dans le cas où une des deux roues se mettrait à déraper, la servovalve commune abaisserait l'effort de freinage sur les deux roues appairées.

L'architecture comporte en outre un circuit de parc P (en traits mixtes épais) aboutissant sur chacun des freins à la cavité 2a, via un clapet navette 6 organisant la liaison de la cavité 2a soit au circuit normal N, soit au circuit de parc P. L'architecture comporte encore deux circuits retour R (en traits fins). Les arrivées de fluide vers le circuit normal N, le circuit secours S et le circuit de parc P sont contrôlées respectivement par des vannes 7,8,9.

Dans cette architecture, les deux cavités de chacun des freins sont indépendantes et actionnées de manière exclusive afin d'éviter le mélange de fluide entre circuits Normal et Secours, ce qui a pour avantage d'éviter des tâches de maintenance qui pourraient résulter d'un éventuel mélange des fluides provenant des deux circuits. Mais cette minimisation de l'effort de maintenance se fait au détriment de la masse du système, chacun des freins ayant en permanence une cavité inutilisée.

Une telle architecture présente une faible sensibilité aux pannes, étant donné que la plupart des composants sont redondés : deux circuits de freinage indépendants pouvant délivrer une performance de freinage optimale (circuit Normal) ou légèrement réduite (circuit Secours), alimentant chacun les deux cavités de frein indépendantes.

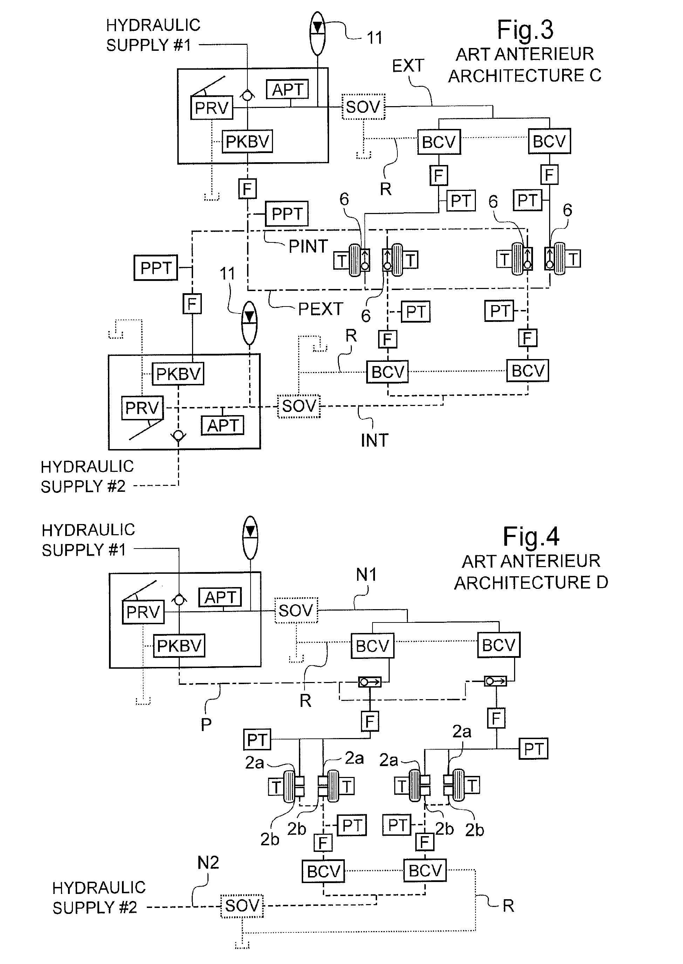

Un deuxième type d'architecture B connue est illustré à la figure 2. Sur cette figure et sur les figures 3 et 4, les éléments communs avec la figure 2 ne sont plus numérotés, pour plus de clarté. Les circuits N,S,P, R sont représentés avec le même type de traits. Dans l'architecture illustrée à la figure 2, les freins 2 comportent chacun une unique cavité qui est alimentée alternativement par l'un ou l'autre du circuit de freinage normal ou du circuit de freinage secours au moyen de clapets navettes 10. De même que dans l'architecture précédente, le circuit normal N possède autant de servovalves que de roues freinées, tandis que le circuit secours n'ayant qu'une seule servovalve par paire de roues. L'unicité de cavité des freins permet une utilisation optimale du frein, puisque celle-ci est utilisée aussi bien en normal qu'en secours. Cependant la cavité est alimentée alternativement par l'un ou l'autre circuit de freinage, de sorte que des transferts ou mélange de fluide entre circuits Normal et Secours sont susceptibles de se produire à chaque cycle de sollicitation de l'architecture (notamment lors des tests fonctionnels avant l'atterrissage, mais aussi selon l'ordre d'allumage et/ou d'extinction des moteurs). De tels transferts ou mélange de fluide occasionnent des tâches de maintenance régulières, notamment pour rééquilibrer les niveaux hydrauliques dans les bâches de l'aéronef, mais également pour prévenir tout risque de pollution chimique qui viendrait à se propager d'un fluide vers l'autre.

Enfin, une telle architecture présente une sensibilité aux pannes un peu plus importante que celle de l'architecture précédente, en raison de l'utilisation d'une unique cavité de freinage, et donc d'un point commun (les clapets navette 10) dont la défaillance condamne le frein dans sa totalité.

Une troisième architecture C connue est illustrée à la figure 3. Dans cette architecture, les freins 2 ne comportent qu'une unique cavité. L'architecture comporte deux circuits hydrauliques identiques, activés de manière simultanée, alimentant chacun deux freins parmi les quatre (respectivement un circuit interne INT alimentant les freins des roues intérieures, et un circuit externe EXT alimentant les freins des roues extérieures). Il n'y a donc aucun risque de transfert de fluide entre les circuits. Afin de respecter les règles de certification, notamment le fait qu'aucune panne simple de quelque nature que ce soit dans le système de freinage ne doit causer un rallongement de la distance de freinage supérieur ou égal à 100%, les dispositions suivantes doivent être considérées lors du dimensionnement de l'architecture hydraulique de freinage:
- Les freins doivent être capables d'absorber le double de l'énergie nominale en cas d'indisponibilité d'un des deux circuits de freinage, conduisant à un atterrissage avec uniquement deux roues freinées. Il en résulte un sur-dimensionnement de ces mêmes freins, et par conséquent une masse accrue.
- Chacun des deux circuits de freinage est généralement muni d'un accumulateur, qui est un équipement hydraulique de masse relativement élevée en regard des autres équipements, afin de réduire l'occurrence des cas de pannes conduisant à la situation exposée ci-avant (la panne la plus probable étant la perte de la génération hydraulique de l'aéronef).

Par ailleurs, le circuit de parc est lui-même dédoublé en deux demi-circuits Pext, Pint, agissant sur les mêmes cavités respectivement que les circuits de freinage EXT et INT, via des clapets navettes 6. Ce dédoublement oblige notamment à prévoir deux accumulateurs 11 au lieu d'un seul, ce qui augmente l'effort de maintenance (vérification du gonflage des accumulateurs) et la masse de l'architecture.

Une telle architecture présente une grande sensibilité aux pannes, étant donné qu'elle ne présente aucune redondance, que ce soit au niveau du circuit de freinage qu'au niveau des freins eux-mêmes.

Enfin, une quatrième architecture D connue est illustrée à la figure 4. Cette architecture a la particularité de comporter des freins 2 comportant deux demi-cavités 2a, 2b. Chaque demi-cavité étant alimentée par l'un des deux circuits de freinage N1 et N2. Les deux demi-cavités sont alimentées de façon simultanée. On parle ici de demi-cavité, plutôt que de double cavité, car ces demi-cavités sont activées simultanément, et peuvent ne pas suffir isolément pour développer l'intégralité de l'effort de freinage. Les deux demi-cavités de chaque frein sont indépendantes, évitant ainsi tout mélange de fluide entre les circuits de freinage.

Ici, les circuits de freinage N1 et N2 comportent chacun deux servovalves alimentant chacun deux demi-cavités sur deux freins distincts. Cette disposition, si elle permet un gain de masse, ne permet pas un contrôle optimal du freinage roue par roue.

Les deux circuits de freinage N1,N2 sont ici encore identiques (hormis la fonction frein de parc qui n'est souvent implémentée que sur l'un des 2 circuits), Chaque circuit possède deux servovalves, alimentant chacun deux demi-cavités sur deux freins distincts. Une telle disposition minimise la masse du système de freinage, au détriment de la performance de freinage.

Enfin, une telle architecture présente une faible sensibilité aux pannes, étant donné que la plupart des composants sont redondés : deux circuits de freinage indépendants, alimentant chacun deux demi-cavités de frein (à raison d'une par roue freinée), et pouvant délivrer chacun un certain niveau de performance de freinage, quoique non optimal étant donné le contrôle appairé des freins.

### OBJET DE L'INVENTION

L'invention a pour objet de proposer une nouvelle architecture de freinage, offrant un bon compromis en termes de masse de l'architecture, performance, disponibilité, et fiabilité.

### BREVE DESCRIPTION DE L'INVENTION

En vue de la réalisation de ce but, on propose une architecture de freinage hydraulique pour aéronef comportant une pluralité de roues équipées de freins comportant chacun deux demi-cavités, l'architecture comportant :
- un premier circuit de freinage comportant des servovalves alimentant chacune une ou plusieurs demi-cavités sur des freins distincts ;
- un deuxième circuit de freinage comportant des servovalves alimentant chacune une ou plusieurs demi-cavités sur des freins distincts ;
les deux circuits hydrauliques fonctionnant simultanément de sorte que sur chaque frein, l'une des demi-cavités est alimentée par l'une des servovalves du premier circuit de freinage, et l'autre demi-cavité est alimentée par l'une des servovalves du deuxième circuit de freinage, une au moins des demi-cavités étant alimentée par une servovalve qui n'alimente que cette demi-cavité.

Ainsi, on conserve le principe des demi-cavités de l'architecture D, qui permet une indépendance totale des deux circuits hydrauliques. Les deux demi-cavités sont utilisées simultanément, mais, sur chacun des freins, au moins l'une des demi-cavités est contrôlée par une servovalve unique, ce qui permet une régulation optimisée du freinage de la roue concernée, quand bien même l'autre demi-cavité serait alimentée de concert avec une autre demi-cavité d'un autre frein. Ainsi, on arrive à effectuer un contrôle optimal du freinage, tout en recourant à un nombre raisonnable de servovalves.

### DESCRIPTION DETAILLEE DE MODES DE MISE EN OEUVRE DE L'INVENTION

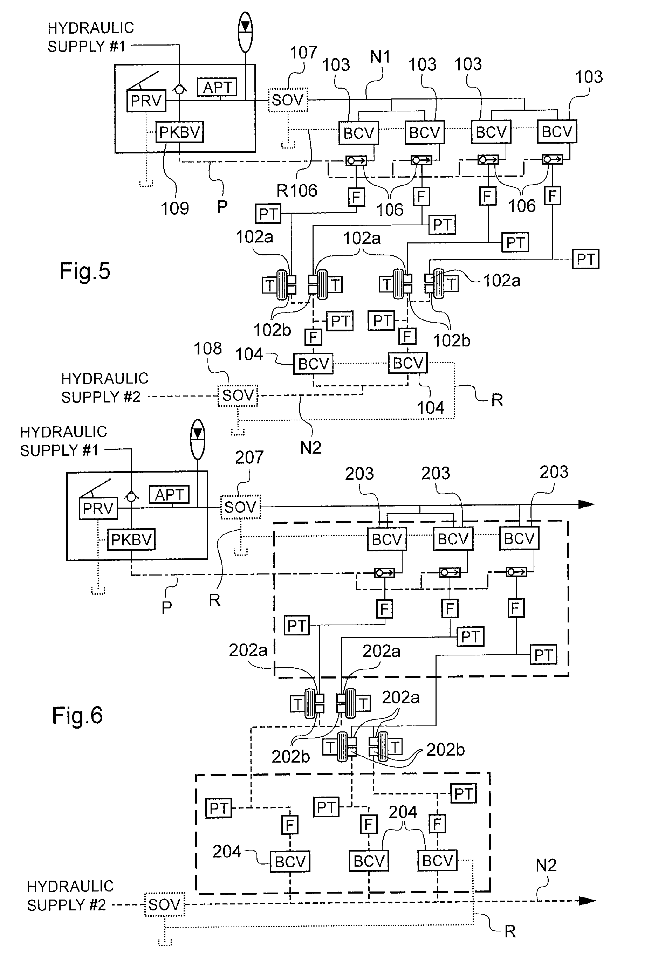

A la figure 5 est illustré de façon schématique un premier mode particulier de mise en oeuvre de l'invention, en application à un aéronef à quatre roues freinées. Les références des éléments communs aux autres architectures sont augmentées d'une centaine. Ici, les freins comportent deux demi-cavités 102a et 102b.

L'architecture comprend deux circuits hydrauliques de freinage N1 et N2, alimentant respectivement les demi-cavités 102a et 102b, et fonctionnant simultanément.

Le circuit de freinage N1 comporte quatre servovalves 103, alimentant chacune l'une seule des demi-cavités 102a. Le circuit de freinage N2 comporte quant à lui uniquement deux servovalves 104, alimentant chacune deux des demi-cavités 102b. Ainsi, et conformément à l'invention, sur chacun des freins, au moins l'une des demi-cavités est alimentée par une servovalve n'alimentant que cette demi-cavité, de sorte qu'il est possible d'optimiser le freinage roue par roue. L'architecture comporte un circuit de parc P associé à la même source de puissance hydraulique que le circuit de freinage N1 et alimentant les même demi-cavités 102a via des clapets navettes 106. L'architecture comporte des vannes d'isolation 107,108, 109 pour isoler respectivement le circuit de freinage N1, le circuit de freinage N2, et le circuit de parc P. L'architecture comporte également deux circuits retour R collectant les retours des servovalves 103,104.

Selon une variante illustrée à la figure 6, le circuit N1 peut ne comporter que trois servovalves 203, dont deux alimentent chacune une unique demi-cavité 202a, tandis que la troisième servovalve alimente deux demi-cavités 202a sur deux freins distincts. Ainsi, le circuit N1 comporte exactement le même nombre d'équipements que le circuit N2. Il convient de veiller, conformément à l'invention, que sur chacun des freins, au moins l'une des demi-cavités est alimentée par une servovalve qui n'alimente que cette demi-cavité. Ainsi, et comme cela est visible sur la figure 6, les deux roues du haut (par exemple les roues portées par l'un des atterrisseurs principaux) ont des freins dont les demi-cavités 202a sont alimentées chacune par une servovalve 203 du circuit N1, les demi-cavités 202b correspondantes étant toutes deux alimentées par une même servovalve 204 du circuit N2. Quant aux roues du bas (les roues portées par l'autre atterrisseur principal), elles ont des demi-cavités 202b alimentées chacune par une servovalve 204 du circuit N2, les demi-cavités 202a correspondantes étant toutes deux alimentées par une même servovalve 203 du circuit N1.

Comme cela est suggéré à la figure 6, les dispositions de l'invention peuvent être aisément généralisées à d'autres configurations, par exemple à un aéronef comportant huit roues freinées réparties sur deux atterrisseurs principaux. Il suffit de considérer sur la figure 6 que les quatre roues freinées illustrées sont celles de l'atterrisseur gauche, et de reproduire le même schéma pour les roues freinées de l'atterrisseur droit, les servovalves correspondantes étant connectés aux mêmes circuits de freinage N1 et N2.

## Revendications

1. Architecture de freinage hydraulique pour aéronef comportant une pluralité de roues équipées de freins (102;202) comportant chacun deux demi-cavités (102a,102b;202a,202b), l'architecture comportant :
- un premier circuit de freinage (N1) comportant des servovalves (103;203) alimentant chacune une ou plusieurs demi-cavités (102a;202a) sur des freins distincts ;
- un deuxième circuit de freinage (N2) comportant des servovalves (104;204) alimentant chacune une ou plusieurs demi-cavités (102b;202b) sur des freins distincts ;
les deux circuits hydrauliques (N1;N2) fonctionnant simultanément de sorte que sur chaque frein (102;202), l'une des demi-cavités (102a;202a) est alimentée par l'une des servovalves (103;203) du premier circuit de freinage (N1), et l'autre demi-cavité (102b;202b) est alimentée par l'une des servovalves (104;204) du deuxième circuit de freinage (N2), l'architecture étant **caractérisée en ce qu'**une au moins des demi-cavitées (102a;202a,202b) est alimentée par une servovalve (103;203,204) qui n'alimente que cette demi-cavité (102a;202a,202b).

2. Architecture de freinage selon la revendication 1, dans laquelle, pour chaque frein, une des demi-cavités (202a;202b) est alimentée par une servovalve (203;204) qui n'alimente que cette demi-cavité, l'autre des demi-cavités (202b;202a) est alimentée par une servovalve (204;203) alimentant cette demi-cavité et une autre demi-cavité sur un autre frein.

3. Architecture de freinage selon la revendication 1, ne comportant qu'un unique circuit de parc (P) ayant une source hydraulique commune avec l'un des circuits de freinage (N1), et alimentant uniquement les demi-cavités (102a;202a) associées à ce circuit de freinage (N1).

## Patentansprüche

1. Architektur für eine hydraulische Bremse für ein Flugzeug, umfassend eine Vielzahl von Rädern, die mit Bremsen (102; 202) ausgestattet sind, die jeweils zwei Halb-Hohlräume (102a, 102b; 202a, 202b) umfassen, wobei die Architektur umfasst:
- einen ersten Bremskreis (N1), der Servoventile (103; 203) umfasst, die jeweils einen oder mehrere Halb-Hohlräume (102a; 202a) an verschiedenen Bremsen versorgen,
- einen zweiten Bremskreis (N2), der Servoventile (104; 204) umfasst, die jeweils einen oder mehrere Halb-Hohlräume (102b; 202b) an verschiedenen Bremsen versorgen,
wobei die beiden Hydraulikkreise (N1; N2) gleichzeitig arbeiten, derart, dass an jeder Bremse (102; 202) einer der Halb-Hohlräume (102a; 202a) von einem der Servoventile (103; 203) des ersten Bremskreises (N1) versorgt wird und der andere Halb-Hohlraum (102b; 202b) von einem der Servoventile (104; 204) des zweiten Bremskreises (N2) versorgt wird, wobei die Architektur **dadurch gekennzeichnet ist, dass** mindestens einer der Halb-Hohlräume (102a; 202a, 202b) von einem Servoventil (103; 203, 204) versorgt wird, das nur diesen Halb-Hohlraum (102a; 202a, 202b) vorsorgt.

2. Bremsarchitektur nach Anspruch 1, wobei bei jeder Bremse einer der Halb-Hohlräume (202a; 202b) von einem Servoventil (203; 204) versorgt wird, das nur diesen Halb-Hohlraum versorgt, wobei der andere der Halb-Hohlräume (202b; 202a) von einem Servoventil (204; 203) versorgt wird, das diesen letztgenannten Halb-Hohlraum und einen weiteren Halb-Hohlraum an einer weiteren Bremse versorgt.

3. Bremsarchitektur nach Anspruch 1, umfassend nur einen einzigen Parkkreis (P), der eine mit einem der Bremskreise (N1) gemeinsame Hydraulikquelle hat und nur die Halb-Hohlräume (102a; 202a) versorgt, die mit diesem Bremskreis (N1) verbunden sind.

## Claims

1. A hydraulic braking architecture for aircraft including a plurality of wheels fitted with brakes (102 ; 202), each including two half-cavities (102a, 102b ; 202a, 202b), the architecture comprising:
· a first braking circuit (N1) including servovalves (103; 203), each powering one or more half-cavities (102a; 202a) on separate brakes; and
· a second braking circuit (N2) including servovalves (104 ; 204), each powering one or more half-cavities (102b ; 202b) on separate brakes ; both hydraulic circuits (N1 ; N2) operating simultaneously in such a manner that on each brake (102 ; 202), one of the half-cavities (102a ; 202a) is powered by one of the servovalve (103 ; 203) of the first braking circuit (N1), and the other half-cavity (102b ; 202b) is powered by one of the servovalve (104 ; 204) of the second braking circuit (N2), the architecture being **characterized in that** at least one of the half-cavities (102a ; 202a ; 202b) is powered by a servovalve (103 ; 203, 204) that powers only said half-cavity (102a ; 202a, 202b).

2. A braking architecture according to claim 1, wherein for each brake, one of the half-cavities (202a; 202b) is powered by a servovalve (203; 204) that powers only said half-cavity, while the other half-cavity (202b; 202a) is powered by a servovalve (204; 203) powering said half-cavity and another half-cavity on another brake.

3. A braking architecture according to claim 1, comprising only a single parking circuit (P) having a hydraulic power supply shared by one of the braking circuits (N1), and powering only the half-cavities (102a ; 202a) associated with said braking circuit (N1).
